# EUROPEAN PATENT SPECIFICATION

(11) **EP 2 974 948 B1**
(45) Date of publication and mention of the grant of the patent: **23.11.2016**
(21) Application number: 15169157.3
(22) Date of filing: 26.05.2015
(51) Int. Cl.: B62J 1/12, F02M 35/16

(54) **STRADDLE-TYPE VEHICLE**
GRÄTSCHSITZFAHRZEUG
VÉHICULE DE TYPE À SELLE

(30) Priority: 27.05.2014 JP 2014108809
(43) Date of publication of application: 20.01.2016
(73) Proprietor: Yamaha Hatsudoki Kabushiki Kaisha, Iwata-shi, Shizuoka 438-8501 (JP)
(72) Inventor: AMANO, Takashi, Iwata-shi, Shizuoka 438-8501 (JP); MATSUBARA, Toshio, Iwata-shi, Shizuoka 438-8501 (JP); TSUJI, Masayuki, Iwata-shi, Shizuoka 438-8501 (JP)
(74) Representative: Grünecker Patent- und Rechtsanwälte PartG mbB

(56) References cited:
- JP-A- H01 223 091
- JP-U- H0 321 557
- US-A- 4 694 924
- US-A1- 2006 065 457

## Description

The present invention relates to a straddle-type vehicle.

Conventionally, what is called an underbone straddle-type vehicle is known. The underbone straddle-type vehicle is equipped with a head pipe, and a body frame having a main frame extending rearward and obliquely downward from the head pipe, and an engine disposed below the body frame. In the underbone straddle-type vehicle, space is formed in front of the seat, and the height of the region between the handlebar and the seat is set low.

JP 2007-099143 A discloses an underbone straddle-type vehicle including an air cleaner disposed behind an engine, and a seat, located above the air cleaner, for a rider to sit on. A member having a seat support portion for supporting the seat so as to pivot up and down is disposed above the air cleaner.

When the volumetric capacity of the air cleaner is larger, the performance of the engine tends to be better, and the noise during air inspiration tends to be less. When the volumetric capacity of the air cleaner needs to be increased in the technology disposed in JP 2007-099143 A, it is difficult to enlarge the air cleaner upwardly because the member having the seat support portion for supporting the seat is disposed above the air cleaner. If the battery box is disposed more upwardly, the position of the seat becomes higher, worsening the ground reach of the rider. In addition, in the underbone straddle-type vehicle, it is difficult to enlarge the air cleaner frontward because a space is formed in front of the seat. Furthermore, since the fuel tank and so forth are disposed behind the air cleaner, it is also difficult to enlarge the air cleaner rearward. JP H01-223091 A discloses a straddle-type vehicle according to the preamble of claim 1.

The present invention has been accomplished in view of the foregoing and other problems. It is an object of the invention to provide a straddle-type vehicle that can obtain a sufficient volumetric capacity of the air cleaner while ensuring easy ground reach for the rider. According to the present invention said object is solved by a straddle-type vehicle having the features of independent claim 1. Preferred embodiments are laid down in the dependent claims.

Having paid special attention to the space occupied by the member that is disposed above the air cleaner and provided with the seat support portion, it has been discovered that the volumetric capacity of the air cleaner can be increased by integrally forming the air cleaner and the seat support portion with each other. However, forming the air cleaner and the seat support portion integrally with each other means that the weight load applied to the seat can be transmitted to the air cleaner via the seat support portion. The weight load applied from the seat to the air cleaner may cause the air cleaner to be sheared at its joint surfaces, resulting in the entry of water, dust, or the like through the joint surfaces of the air cleaner. The present teaching has been devised based on the findings described above.

It is provided a straddle-type vehicle comprising: a head pipe; a main frame extending rearward and obliquely downward from the head pipe; a left seat frame extending rearward from the main frame; a right seat frame extending rearward from the main frame and being disposed rightward of the left seat frame; a seat positioned above the left seat frame and the right seat frame; a body cover being provided over at least one side of each of the left seat frame and the right seat frame, and including an upper surface portion being located rearward of the head pipe and frontward of the seat and extending rearward and obliquely downward to a position downward relative to the seat; an air cleaner being disposed between the left seat frame and the right seat frame and below the seat, and including an upper surface having a front end portion recessed downward, the front end portion disposed rearward of the recessed portion; an engaging portion disposed on a back surface of the seat; a seat support portion engaged with the engaging portion and formed integrally with the air cleaner, the seat support portion being disposed so as to be spaced apart from the front end portion of the upper surface of the air cleaner and overlapping with the front end portion of the upper surface of the air cleaner as viewed in plan of the vehicle, and the seat support portion supporting the seat in an openable and closable manner; a left seat load bearing portion extending downward from the seat support portion and being supported by the left seat frame; and a right seat load bearing portion extending downward from the seat support portion, being disposed rightward of the left seat load bearing portion, and being supported by the right seat frame.

In the straddle-type vehicle according to the present teaching, the seat support portion for supporting the seat is formed integrally with the air cleaner. Therefore, it is unnecessary to separately provide a member for supporting the seat below the seat and above the air cleaner. This makes it possible to increase the size of the air cleaner upwardly by effectively utilizing the space formed below the seat, without raising the position of the seat upward. That is, the size of the air cleaner can be increased upwardly so that the front end portion of the upper surface of the air cleaner can be disposed rearward of the recessed portion of the body cover. As a result, the air cleaner is ensured to have a sufficient volumetric capacity. In addition, the front end portion of the upper surface of the air cleaner is disposed so as to be spaced apart from the seat support portion, and the seat support portion overlaps with the front end portion of the upper surface of the air cleaner as viewed in plan of the vehicle. Therefore, the seat load is transmitted to the left and right seat load bearing portions via the seat support portion, which is integrally formed with the air cleaner, so the seat load is less likely to be transmitted to the air cleaner. This prevents the shearing of the joint surfaces of the air cleaner, making it possible to prevent the deterioration of the sealing performance of the air cleaner and consequently prevent the entry of water, dust, or the like through the joint surfaces of the air cleaner.

In another preferred embodiment of the present teaching, the straddle-type vehicle further includes: a left support portion being provided on the left seat frame and supporting the left seat load bearing portion; a right support portion being provided on the right seat frame and supporting the right seat load bearing portion, and wherein the left support portion and the right support portion are positioned below the seat support portion as viewed from a side of the vehicle.

The just-described preferred embodiment enables the seat load applied to the seat support portion to be transmitted more reliably to the left seat frame and the right seat frame via the left support portion and the right support portion.

In another preferred embodiment of the present teaching, the air cleaner comprises an upper air cleaner case disposed between the left seat frame and the right seat frame as viewed in plan of the vehicle, and a lower air cleaner case disposed below the upper air cleaner case and joined to the upper air cleaner case; each of the left support portion and the right support portion is disposed on a first portion of each of the left seat frame and the right seat frame in which each of the left seat frame and the right seat frame overlaps with the air cleaner as viewed from a side of the vehicle; and a joined position between the upper air cleaner case and the lower air cleaner case is positioned upward relative to the first portion.

The just-described preferred embodiment makes it possible to simplify the structure of the left support portion for supporting the left seat load bearing portion and the right support portion for supporting the right seat load bearing portion. Moreover, maintenance of the inside of the air cleaner becomes easier.

In another preferred embodiment of the present teaching, the straddle-type vehicle further comprises a fuel tank disposed rearward of the air cleaner, and a top end of the upper air cleaner case is positioned upward relative to a vertically central position of the fuel tank.

With the just-described preferred embodiment, the air cleaner can have a larger volumetric capacity because the top end of the upper air cleaner case can be positioned upward relative to the vertically central position of the fuel tank.

In another preferred embodiment of the present teaching, a height difference between the top end of the upper air cleaner case and a top end of the fuel tank may be smaller than a height difference between the top end of the upper air cleaner case and the vertically central position of the fuel tank.

With the just-described preferred embodiment, the air cleaner can have a larger volumetric capacity.

In another preferred embodiment of the present teaching, a lateral width of the seat support portion may be smaller than a lateral width of a front end portion of the upper surface of the upper air cleaner case; the left seat load bearing portion may incline from the seat support portion toward the left seat frame; and the right seat load bearing portion may incline from the seat support portion toward the right seat frame.

In the just-described preferred embodiment, the lateral width of the seat support portion is smaller than the lateral width of the front end portion of the upper surface of the upper air cleaner case. This makes it possible to reduce the lateral width of the portion of the seat that is positioned above the support portion. As a result, the rider's ground reach is improved.

In another preferred embodiment of the present teaching, the upper air cleaner case and the seat support portion are formed of a material that is harder and more rigid than the material that forms the lower air cleaner case.

The just-described preferred embodiment can achieve a weight reduction and a cost reduction by increasing the rigidity of the seat support portion, which receives the seat load, and the rigidity of the upper air cleaner case, which can slightly receive the seat load, while lowering the rigidity of the lower air cleaner case, which does not receive the seat load.

In another preferred embodiment of the present teaching, the lower air cleaner case includes a first rib extending in a vehicle longitudinal direction and in a vertical direction, and a second rib extending in a vehicle lateral direction and in a vertical direction, the first rib and the second rib being formed on an inner wall of the lower air cleaner case.

When resonance is caused in the lower air cleaner, noise can be produced. The just-described embodiment can suppress the noise because the lower air cleaner case includes the first rib and the second rib formed therein.

In another preferred embodiment of the present teaching, the seat support portion is provided with a plurality of ribs extending in a vehicle longitudinal direction.

The just-mentioned preferred embodiment enables the seat support portion to have higher rigidity.

In another preferred embodiment of the present teaching, the air cleaner includes a left securing portion disposed rearward of the left seat load bearing portion and supported by the left seat frame, and a right securing portion disposed rearward of the right seat load bearing portion and supported by the right seat frame.

In the just-described preferred embodiment, the air cleaner is supported by the left and right seat frames at the left and right seat load bearing portions and the left and right securing portions. Therefore, the just-described preferred embodiment can inhibit the rotational movement of the air cleaner that results from the moment produced at the seat support portion when the seat is opened.

In another preferred embodiment of the present teaching, the left seat load bearing portion includes a lower end disposed downward relative to the left securing portion; the right seat load bearing portion includes a lower end disposed downward relative to the right securing portion; and the body cover is provided over at least one side of each of the left seat load bearing portion and the right seat load bearing portion.

In the just-described preferred embodiment, the size of the body cover provided over the sides of the left and right seat load bearing portions becomes larger along the vehicle lateral direction. However, since the lower ends of the left and right securing portions are disposed downward relative to the left and right securing portions, the portion of the body cover that becomes larger along the vehicle lateral direction is positioned further downward. As a result, the rider's ground reach is improved.

### ADVANTAGEOUS EFFECTS OF INVENTION

The present invention makes it possible to provide an underbone straddle-type vehicle that can obtain a sufficient volumetric capacity of the air cleaner while ensuring easy ground reach for the rider.

### BRIEF DESCRIPTION OF DRAWINGS

[Fig. 1] Fig. 1 is a left side view illustrating a straddle-type vehicle according to one preferred embodiment.
[Fig. 2] Fig. 2 is a left side view illustrating a body frame and a neighboring region thereof according to one preferred embodiment.
[Fig. 3] Fig. 3 is a plan view illustrating the body frame and the neighboring region thereof according to one preferred embodiment.
[Fig. 4] Fig. 4 is a plan view illustrating the body frame according to one preferred embodiment.
[Fig. 5] Fig. 5 is a left side view illustrating the body frame according to one preferred embodiment.
[Fig. 6] Fig. 6 is a perspective view illustrating the body frame and the neighboring region thereof according to one preferred embodiment.
[Fig. 7] Fig. 7 is a perspective view illustrating the body frame and the neighboring region thereof according to one preferred embodiment.
[Fig. 8] Fig. 8 is a plan view illustrating a lower air cleaner according to one preferred embodiment.
[Fig. 9] Fig. 9 is a cross-sectional view taken along line IX-IX in Fig. 8.
[Fig. 10] Fig. 10 is a cross-sectional view taken along line X-X in Fig. 8.

### DESCRIPTION OF EMBODIMENTS

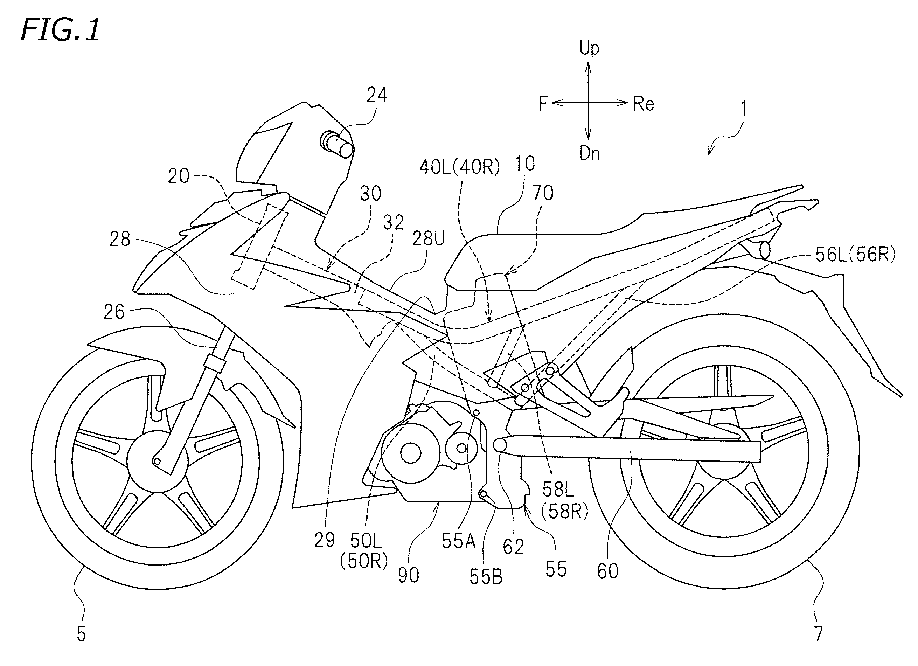

Hereinbelow, preferred embodiments of the present teaching will be described. As illustrated in Fig. 1, the straddle-type vehicle according to the present preferred embodiment is an underbone type motorcycle 1. Note that the straddle-type vehicle means a vehicle such that the rider straddles the vehicle when riding.

In the following description, the terms "front," "rear," "left," "right," "up," and "down" respectively refer to front, rear, left, right, up, and down as defined based on the perspective of the rider seated on the seat 10 of the motorcycle 1, unless specifically indicated otherwise. The terms "above/up" and "below/down" respectively mean the relative vertical positions above/up and below/down as used when the motorcycle 1 is stationary on a horizontal plane. Reference characters F, Re, L, R, Up, and Dn in the drawings indicate front, rear, left, right, up, and down, respectively.

As illustrated in Fig. 1, the motorcycle 1 has a head pipe 20, a body frame 30 connected to the head pipe 20, a seat 10 for the rider to sit on, and an engine 90. A steering shaft (not shown) is supported by the head pipe 20. A handlebar 24 is provided on an upper portion of the steering shaft. A front fork 26 is provided on a lower portion of the steering shaft. A front wheel 5 is supported rotatably at the lower end of the front fork 26.

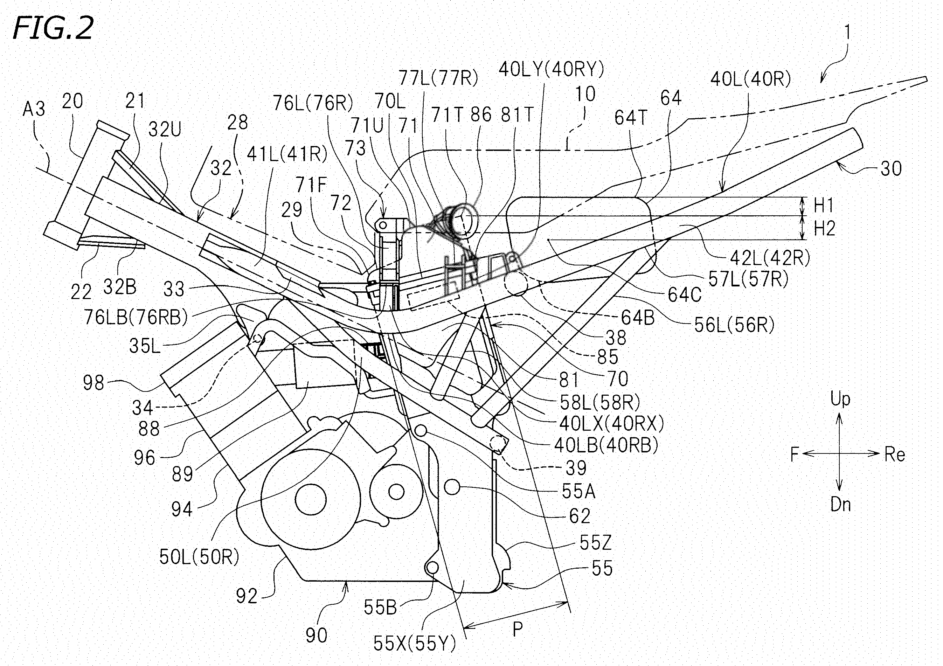

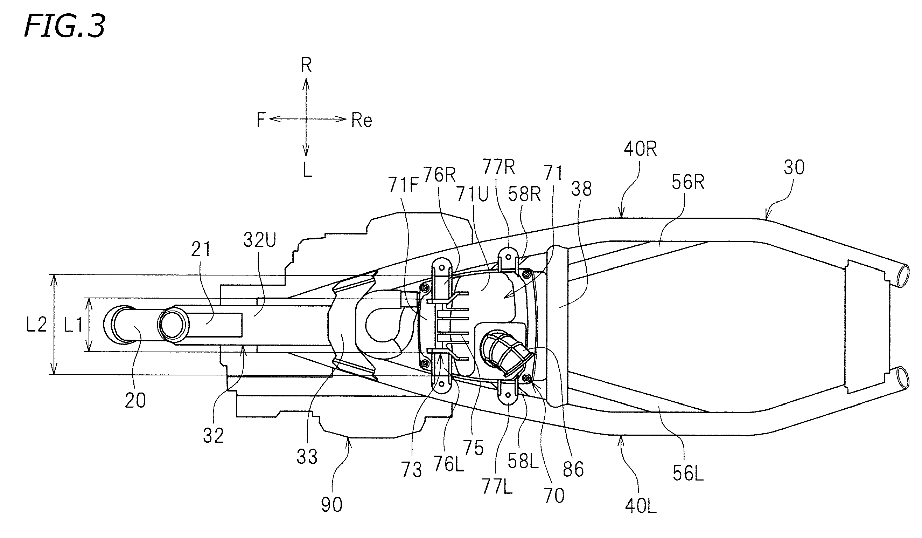

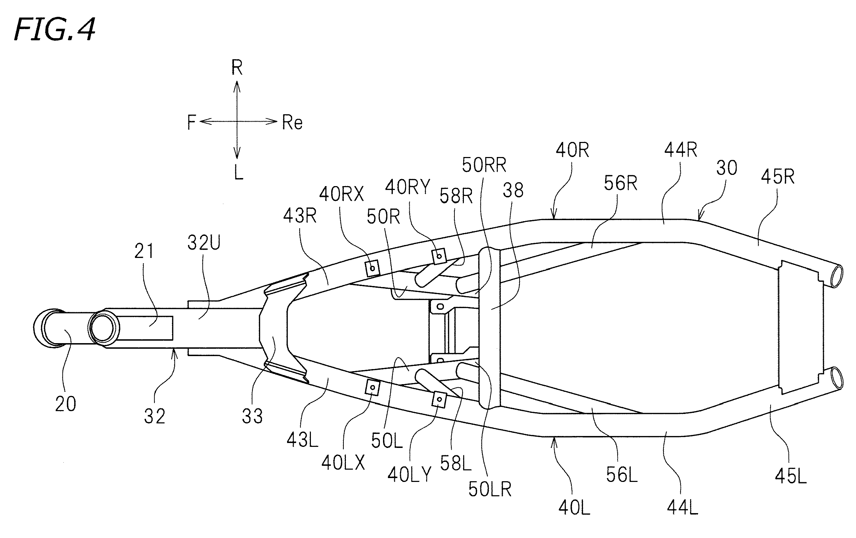

As illustrated in Fig. 2, the body frame 30 has a main frame 32, a left seat frame 40L, a right seat frame 40R (see also Fig. 3), a left down frame 50L, a right down frame 50R (see also Fig. 4), a left backstay 56L, a right backstay 56R (see also Fig. 3), a left reinforcing frame 58L, and a right reinforcing frame 58R (see also Fig. 4).

As illustrated in Fig. 1, the motorcycle 1 has a body cover 28. The body cover 28 is provided over at least one side of each of the left seat frame 40L and the right seat frame 40R. The body cover 28 is provided over the sides of the head pipe 20. The body cover 28 is provided over the sides of the main frame 32. The body cover 28 is provided over the sides of the left seat frame 40L and the right seat frame 40R. The body cover 28 includes an upper surface portion 28U being located rearward of the head pipe 20 and frontward of the seat 10 and extending rearward and obliquely downward to a position downward relative to the seat 10. The vehicle body 28 has a recessed portion 29 recessed downward as viewed from the side of the vehicle. The recessed portion 29 is formed behind the head pipe 20. The recessed portion 29 is formed in front of the seat 10. The recessed portion 29 is formed downward relative to the seat 10. The recessed portion 29 is formed above the engine 90. Because the body cover 28 is provided with the recessed portion 29, a space is formed between the head pipe 20 and the seat 10.

As illustrated in Fig. 2, the engine 90 has a crankcase 92, a cylinder body 94, a cylinder head 96, and a cylinder head cover 98. The cylinder body 94 extends upward from a front portion of the crankcase 92. The cylinder head 96 is disposed above the cylinder body 94 and joined to the cylinder body 94. The cylinder head cover 98 is disposed above the cylinder head 96 and joined to the cylinder head 96. The engine 90 is disposed below the main frame 32. The engine 90 is directly supported by the main frame 32. The engine 90 may be indirectly supported by the main frame 32. The engine 90 is supported by the left down frame 50L and the right down frame 50R. The engine 90 is supported by a later-described engine bracket 55, which is provided on the left down frame 50L and the right down frame 50R (see also Fig. 4). More specifically, the main frame 32 has a first joint portion 34. The first joint portion 34 joins the main frame 32 and the engine 90 to each other. The first joint portion 34 joins the main frame 32 and the cylinder head 96 to each other. The engine bracket 55 includes a second joint portion 55A positioned downward and rearward relative to the first joint portion 34, and a third joint portion 55B positioned downward relative to the second joint portion 55A. The second joint portion 55A and the third joint portion 55B join the engine 55 and the engine bracket 55 to each other. The second joint portion 55A and the third joint portion 55B join the crankcase 92 to the engine bracket 55. The engine 90 may be directly supported by the left down frame 50L and the right down frame 50R.

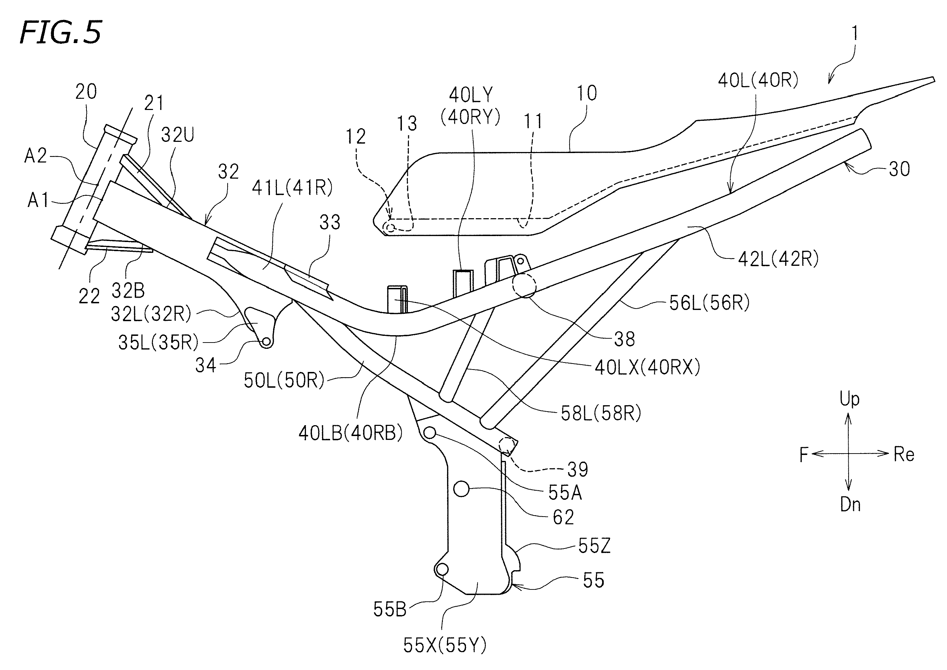

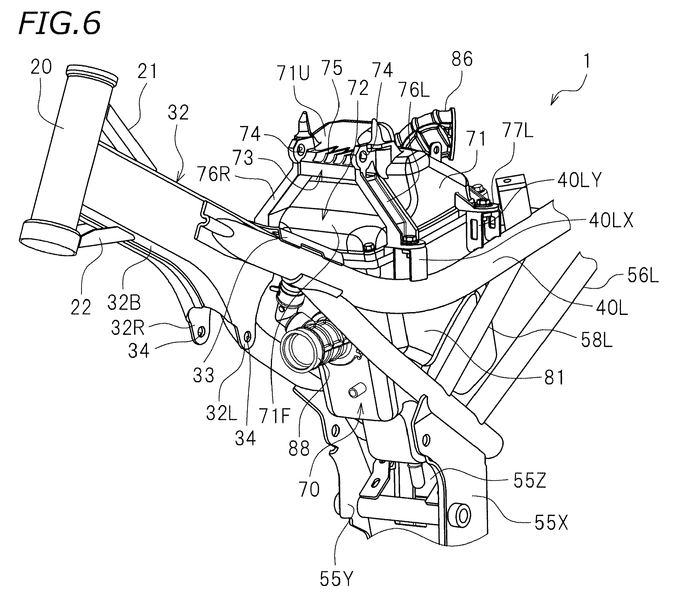

As illustrated in Fig. 5, the main frame 32 is connected to the head pipe 20. The main frame 32 and the head pipe 20 are connected to each other by, for example, welding. The main frame 32 extends rearward and obliquely downward from the head pipe 20. The main frame 32 is formed so that its cross-sectional shape is a rectangular shape. As illustrated in Fig. 6, a rear end portion of the main frame 32 includes a left vertical wall 32L and a right vertical wall 32R. The left vertical wall 32L extends downward. The first joint portion 34 is formed in the left vertical wall 32L. The right vertical wall 32R extends downward. The first joint portion 34 is also formed in the right vertical wall 32R. As illustrated in Fig. 5, a reinforcing member 35L is fitted to the left vertical wall 32L. The reinforcing member 35L is positioned to the left of the left vertical wall 32L. A reinforcing member 35R is fitted to the right vertical wall 32R. The reinforcing member 35R is positioned to the right of the right vertical wall 32R. A vertical midpoint A1 of a portion of the main frame 32 that is connected to the head pipe 20 is positioned downward relative to an axial midpoint A2 of the head pipe 20. As illustrated in Fig. 3, a reinforcing member 33 is fitted to a rear end portion of the main frame 32. The reinforcing member 33 is fitted to a front end portion of the left seat frame 40L and a front end portion of the right seat frame 40R. As illustrated in Fig. 2, the engine 90 is not disposed on the extension line of an axial line A3 of the main frame 32.

As illustrated in Fig. 5, the body frame 30 includes a first reinforcing member 21 and a second reinforcing member 22. The first reinforcing member 21 extends rearward and obliquely downward from the head pipe 20. The first reinforcing member 21 is connected to the head pipe 20 and an upper surface 32U of the main frame 32. The second reinforcing member 22 extends horizontally from the head pipe 20. The second reinforcing member 22 is connected to the head pipe 20 and a lower surface 32B of the main frame 32. The second reinforcing member 22 may extend rearward and obliquely upward from the head pipe 20.

As illustrated in Fig. 5, the left seat frame 40L is connected to the main frame 32. The left seat frame 40L and the main frame 32 are connected to each other by welding. The left seat frame 40L and the main frame 32 may be connected to each other by a bolt or the like. The left seat frame 40L is formed in a pipe shape. The left seat frame 40L is formed so that its cross-sectional shape is circular. The left seat frame 40L includes a left first portion 41 L and a left second portion 42L. The left first portion 41 L and the left second portion 42L are integrally formed with each other. The left first portion 41 L extends rearward and obliquely downward from the main frame 32. The inclination angle of the left first portion 41 L from the horizontal line is substantially the same as the inclination angle of the main frame 32 from the horizontal line. The left second portion 42L extends rearward and obliquely upward from the left first portion 41 L. The left first portion 41 L of the left seat frame 40L is connected to the main frame 32 at a position that is frontward relative to the first joint portion 34. A lower end 40LB of the left seat frame 40L is positioned upward relative to the first joint portion 34.

As illustrated in Fig. 4, the left seat frame 40L includes a left third portion 43L, a left fourth portion 44L, and a left fifth portion 45L. The left third portion 43L, the left fourth portion 44L, and the left fifth portion 45L are integrally formed with each other. The left third portion 43L extends rearward and obliquely leftward from the main frame 32. The left fourth portion 44L extends rearward from the left third portion 43L. The left fifth portion 45L extends rearward and obliquely rightward from the left fourth portion 44L

As illustrated in Fig. 5, the right seat frame 40R is connected to the main frame 32. The right seat frame 40R and the main frame 32 are connected to each other by welding. The right seat frame 40R and the main frame 32 may be connected to each other by a bolt or the like. The right seat frame 40R is formed in a pipe shape. The right seat frame 40R is formed so that its cross-sectional shape is circular. The right seat frame 40R is disposed rightward of the left seat frame 40L. The right seat frame 40R includes a right first portion 41 R and a right second portion 42R. The right first portion 41 R and the right second portion 42R are integrally formed with each other. The right first portion 41 R extends rearward and obliquely downward from the main frame 32. The inclination angle of the right first portion 41 R from the horizontal line is substantially the same as the inclination angle of the main frame 32 from the horizontal line. The right second portion 42R extends rearward and obliquely upward from the right first portion 41 R. The right first portion 41 R of the right seat frame 40R is connected to the main frame 32 at a position that is frontward relative to the first joint portion 34. A lower end 40RB of the right seat frame 40R is positioned upward relative to the first joint portion 34.

As illustrated in Fig. 4, the right seat frame 40R includes a right third portion 43R, a right fourth portion 44R, and a right fifth portion 45R. The right third portion 43R, the right fourth portion 44R, and the right fifth portion 45R are integrally formed with each other. The right third portion 43R extends rearward and obliquely rightward from the main frame 32. The right fourth portion 44R extends rearward from the right third portion 43R. The right fifth portion 45R extends rearward and obliquely leftward from the right fourth portion 44R.

As illustrated in Fig. 3, the body frame 30 includes a first cross member 38. The first cross member 38 extends laterally, i.e., in a left-to-right/right-to-left direction. The first cross member 38 is connected to the left seat frame 40L and the right seat frame 40R. The first cross member 38 is connected to the left third portion 43L of the left seat frame 40L and the right third portion 43R of the right seat frame 40R. As illustrated in Fig. 5, the first cross member 38 is also connected to the left second portion 42L of the left seat frame 40L and the right second portion 42R of the right seat frame 40R.

As illustrated in Fig. 5, the left down frame 50L is connected to the left first portion 41 L of the left seat frame 40L. The left down frame 50L and the left seat frame 40L are connected to each other by, for example, welding. The left down frame 50L is connected to the left first portion 41 L of the left seat frame 40L at a position upward relative to the first joint portion 34. The left down frame 50L is formed in a pipe shape. The left down frame 50L is formed so that its cross-sectional shape is circular. The left down frame 50L is thinner than the left seat frame 40L. The diameter of the left down frame 50L is smaller than the diameter of the left seat frame 40L. The left down frame 50L extends rearward and obliquely downward from the left seat frame 40L. As illustrated in Fig. 4, the left down frame 50L extends inward in a vehicle lateral direction from the left first portion 41 L (see Fig. 5) of the left seat frame 40L. The left down frame 50L extends rearward and obliquely rightward from the left first portion 41 L of the left seat frame 40L. As viewed in plan of the vehicle, a rear end portion 50LR of the left down frame 50L is positioned between the left seat frame 40L and the right seat frame 40R. The left down frame 50L may extend rearward, or rearward and obliquely leftward, from the left seat frame 40L.

As illustrated in Fig. 5, the right down frame 50R is connected to the right first portion 41 R of the right seat frame 40R. The right down frame 50R and the right seat frame 40R are connected to each other by, for example, welding. The right down frame 50R is connected to the right first portion 41 R of the right seat frame 40R at a position upward relative to the first joint portion 34. The right down frame 50R is formed in a pipe shape. The right down frame 50R is formed so that its cross-sectional shape is circular. The right down frame 50R is thinner than the right seat frame 40R. The diameter of the right down frame 50R is smaller than the diameter of the right seat frame 40R. The right down frame 50R extends rearward and obliquely downward from the right seat frame 40R. As illustrated in Fig. 4, the right down frame 50R is positioned to the right of the left down frame 50L. The right down frame 50R extends inward in a vehicle lateral direction from the right first portion 41 R (see Fig. 5) of the right seat frame 40R. The right down frame 50R extends rearward and obliquely leftward from the right first portion 41 R of the right seat frame 40R. As viewed in plan of the vehicle, a rear end portion 50RR of the right down frame 50R is positioned between the left seat frame 40L and the right seat frame 40R. The right down frame 50R may extend rearward, or rearward and obliquely rightward, from the right seat frame 40R.

As illustrated in Fig. 5, the body frame 30 includes a second cross member 39. The second cross member 39 extends laterally, i.e., in a left-to-right/right-to-left direction. The second cross member 39 is connected to the left down frame 50L and the right down frame 50R. The second cross member 39 is positioned below the first cross member 38. The second cross member 39 is thinner than the first cross member 38.

As illustrated in Fig. 5, the body frame 30 has the engine bracket 55. The engine bracket 55 is provided on the left down frame 50L and the right down frame 50R. The engine bracket 55 supports a rear end portion of the engine 90 (see Fig. 2). The engine bracket 55 includes a left plate member 55X, a right plate member 55Y (see also Fig. 6), and a rear plate member 55Z. The left plate member 55X is connected to the left down frame 50L. The left plate member 55X extends downward from the left down frame 50L. The right plate member 55Y is connected to the right down frame 50R. The right plate member 55Y extends downward from the right down frame 50R. The right plate member 55Y is positioned to the right of the left plate member 55X. The rear plate member 55Z joins the rear end of the left plate member 55X and the rear end of the right plate member 55Y. The rear plate member 55Z extends in a vertical direction. Each of the left plate member 55X and the right plate member 55Y has a second joint portion 55A and a third joint portion 55B.

As illustrated in Fig. 1, the motorcycle 1 has a rear arm 60 joined to the engine bracket 55. The engine bracket 55 and the rear arm 60 are joined to each other via a pivot shaft 62. The rear arm 60 is joined swingably to the engine bracket 55. The rear arm 60 may be joined swingably to the body frame 30 or to the engine 90. A rear wheel 7 is supported rotatably at the rear end of the rear arm 60.

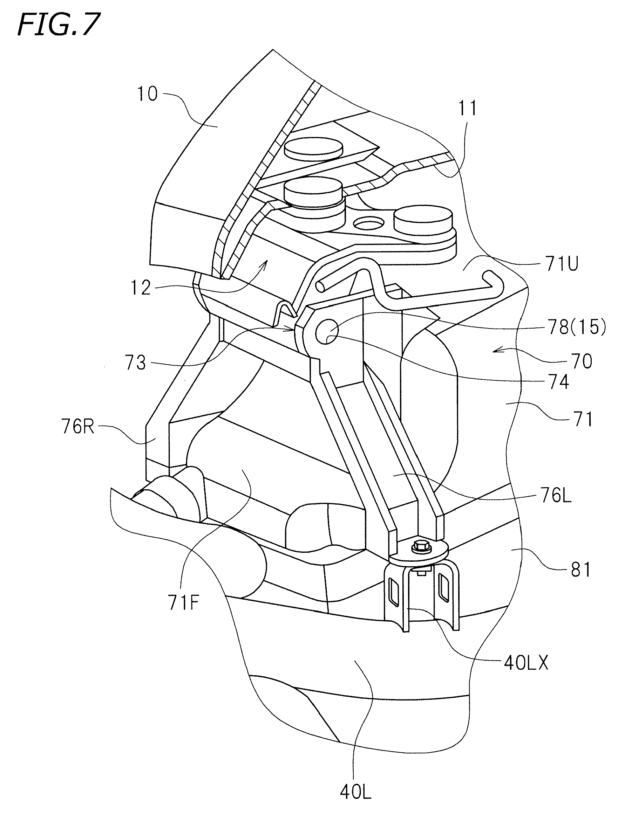

The seat 10 is positioned above the left seat frame 40L and the right seat frame 40R. The seat 10 is supported by the left seat frame 40L and the right seat frame 40R. As illustrated in Fig. 7, the seat 10 has a bracket 12. The bracket 12 is disposed on a back surface 11 of the seat 10. The bracket 12 engages with a later-described seat support portion 73. As illustrated in Fig. 5, the bracket 12 has a through-hole 13 that penetrates through the bracket 12 in a lateral direction. As illustrated in Fig. 7, the bracket 12 of the seat 10 is joined to the seat support portion 73 by a shaft 78. The shaft 78 passes through the through-hole 13 (see Fig. 5) of the bracket 12 of the seat 10 and through a through-hole 74 of the seat support portion 73. The shaft 78, the bracket 12, and the seat support portion 73 together form a hinge mechanism 15. The seat 10 is pivotable about the shaft 78. The hinge mechanism 15 allows the seat 10 to open and close. The seat 10 is pivotable about its front end portion. The bracket 12 may be formed integrally with the seat 10.

As illustrated in Fig. 2, the motorcycle 1 has an air cleaner 70. The air cleaner 70 is disposed below the seat 10. The air cleaner 70 is disposed rearward of the main frame 32. As illustrated in Fig. 3, the air cleaner 70 is disposed between the left seat frame 40L and the right seat frame 40R. As illustrated in Fig. 2, the air cleaner 70 is disposed between the left down frame 50L and the right down frame 50R. The air cleaner 70 is disposed between the left reinforcing frame 58L and the right reinforcing frame 58R. The air cleaner 70 is disposed rearward relative to at least a portion of the engine 90. The air cleaner 70 is disposed rearward relative to the cylinder body 94.

As illustrated in Fig. 2, the air cleaner 70 includes an upper air cleaner case 71, a lower air cleaner case 81, and an element 85. The element 85 cleans the air. The element 85 is disposed in the lower air cleaner case 81. The element 85 may be disposed in the upper air cleaner case 71. The element 85 may be either a dry-type element, that is, an element not impregnated with oil, or a wet-type element, that is, an element impregnated with oil.

The upper air cleaner case 71 is formed of a material that is harder and more rigid than the material that forms the lower air cleaner case 81. As illustrated in Fig. 3, the upper air cleaner case 71 is disposed between the left seat frame 40L and the right seat frame 40R, as viewed in plan of the vehicle. As illustrated in Fig. 2, the lower air cleaner case 81 is disposed below the upper air cleaner case 71. The lower air cleaner case 81 is joined to the upper air cleaner case 71. The lower air cleaner case 81 is disposed between the left seat frame 40L and the right seat frame 40R. The lower air cleaner case 81 is disposed between the left down frame 50L and the right down frame 50R. The lower air cleaner case 81 is disposed between the left reinforcing frame 58L and the right reinforcing frame 58R. A joined position 70L between the upper air cleaner case 71 and the lower air cleaner case 81 is positioned upward relative to a first portion P of each of the left seat frame 40L and the right seat frame 40R. The first portion P of the left seat frame 40L is a portion of the left seat frame 40L in which the left seat frame 40L overlaps with the air cleaner 70 as viewed from a side of the vehicle. The first portion P of the right seat frame 40R is a portion of the right seat frame 40R in which the right seat frame 40R overlaps with the air cleaner 70 as viewed from a side of the vehicle. The joined position 70L is positioned upward relative to the cylinder head cover 98. The joined position 70L is positioned upward relative to the first joint portion 34.

A front end portion 71 F of an upper surface 71 U of the upper air cleaner case 71 is recessed downward. The front end portion 71 F of the upper surface 71 U of the upper air cleaner case 71 is disposed rearward of the recessed portion 29 of the body cover 28. The upper air cleaner case 71 has a recessed portion 72, which is recessed across its entire lateral width. The recessed portion 72 is disposed rearward of the recessed portion 29 of the body cover 28.

As illustrated in Fig. 2, the motorcycle 1 has a seat support portion 73. The seat support portion 73 is formed of a material that is harder and more rigid than the material that forms the lower air cleaner case 81. It is preferable that the material that forms the seat support portion 73 and the material that forms the lower air cleaner case 71 be the same. The seat support portion 73 supports the seat 10 so as to be openable and closable. The seat support portion 73 is formed integrally with the upper air cleaner case 71. As illustrated in Fig. 3, the seat support portion 73 extends laterally, i.e., in a left-to-right/right-to-left direction. The lateral width L1 of the seat support portion 73 is smaller than the lateral width L2 of the front end portion 71 F of the upper surface 71 U of the upper air cleaner case 71. A plurality of ribs 75 extending in a vehicle longitudinal direction are formed on the seat support portion 73. The ribs 75 are formed over the seat support portion 73 and the upper air cleaner case 71. As illustrated in Fig. 6, the seat support portion 73 is disposed so as to be spaced from the front end portion 71 F of the upper surface 71 U of the upper air cleaner case 71. As illustrated in Fig. 3, the seat support portion 73 overlaps with the front end portion 71 F of the upper surface 71 U of the upper air cleaner case 71 as viewed in plan of the vehicle. As illustrated in Fig. 6, the seat support portion 73 has through-holes 71 each penetrating through the seat support portion 73 in a lateral direction.

As illustrated in Fig. 6, the motorcycle 1 has a left seat load bearing portion 76L and a right seat load bearing portion 76R. The left seat load bearing portion 76L extends downward from the left end of the seat support portion 73. The left seat load bearing portion 76L inclines from the left end of the seat support portion 73 toward the left seat frame 40L. As illustrated in Fig. 3, the left seat load bearing portion 76L extends leftward from the left end of the seat support portion 73. The left seat load bearing portion 76L is supported by the left seat frame 40L. The left seat load bearing portion 76L is supported by a left first support portion 40LX (see Fig. 4) provided on the left seat frame 40L. As illustrated in Fig. 2, the left first support portion 40LX is positioned below the seat support portion 73 as viewed from a side of the vehicle. The left first support portion 40LX is disposed on the above-mentioned first portion P. The body cover 28 (see Fig. 1) is provided over a side of the left seat load bearing portion 76L. The body cover 28 is provided leftward of the left seat load bearing portion 76L. The left seat load bearing portion 76L may be supported either directly or indirectly by the left seat frame 40L.

As illustrated in Fig. 3, the right seat load bearing portion 76R is disposed rightward of the left seat load bearing portion 76L. The right seat load bearing portion 76R extends downward from the right end of the seat support portion 73. The right seat load bearing portion 76R inclines from the right end of the seat support portion 73 toward the right seat frame 40R. The right seat load bearing portion 76R extends rightward from the right end of the seat support portion 73. The right seat load bearing portion 76R is supported by the right seat frame 40R. The right seat load bearing portion 76R is supported by a right first support portion 40RX (see Fig. 4) provided on the right seat frame 40R. As illustrated in Fig. 2, the right first support portion 40RX is positioned below the seat support portion 73 as viewed from a side of the vehicle. The right first support portion 40RX is disposed on the above-mentioned first portion P. The body cover 28 (see Fig. 1) is provided over a side of the right seat load bearing portion 76R. The body cover 28 is provided rightward of the right seat load bearing portion 76R. The right seat load bearing portion 76R may be supported either directly or indirectly by the right seat frame 40R.

As illustrated in Fig. 3, the upper air cleaner case 71 has a left securing portion 77L and a right securing portion 77R. The left securing portion 77L is disposed rearward of the left seat load bearing portion 76L. The left securing portion 77L is supported by the left seat frame 40L. The left securing portion 77L is supported by a left second support portion 40LY (see Fig. 4) provided on the left seat frame 40L. As illustrated in Fig. 2, the left second support portion 40LY is disposed on the above-mentioned first portion P. As illustrated in Fig. 3, the right securing portion 77R is disposed rearward of the right seat load bearing portion 76R. The right securing portion 77R is supported by the right seat frame 40R. The right securing portion 77R is supported by a right second support portion 40RY (see Fig. 4) provided on the right seat frame 40R. As illustrated in Fig. 2, the right second support portion 40RY is disposed on the above-mentioned first portion P. The left securing portion 77L is disposed upward relative to the lower end 76LB of the left seat load bearing portion 76L. The right securing portion 77R is disposed upward relative to the lower end 76RB of the right seat load bearing portion 76R.

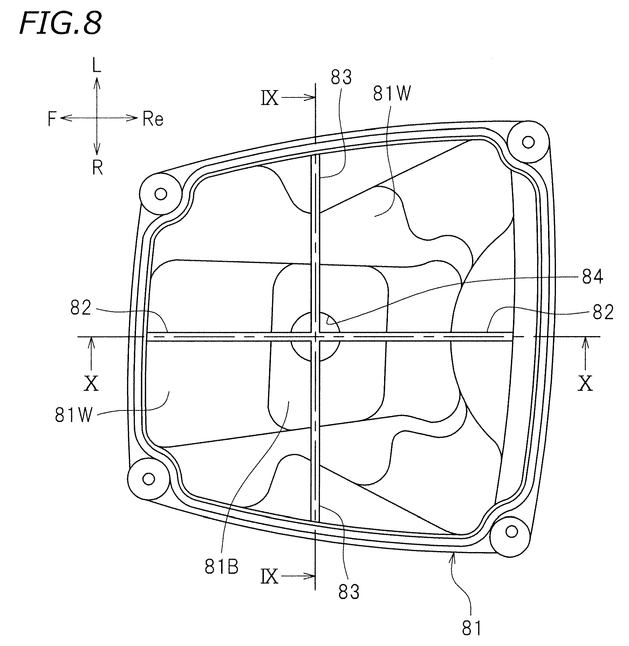

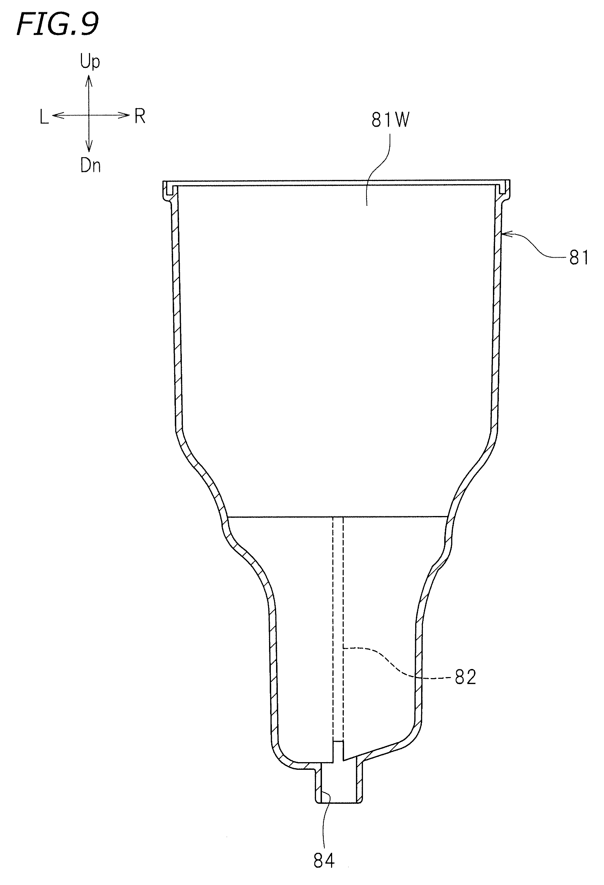

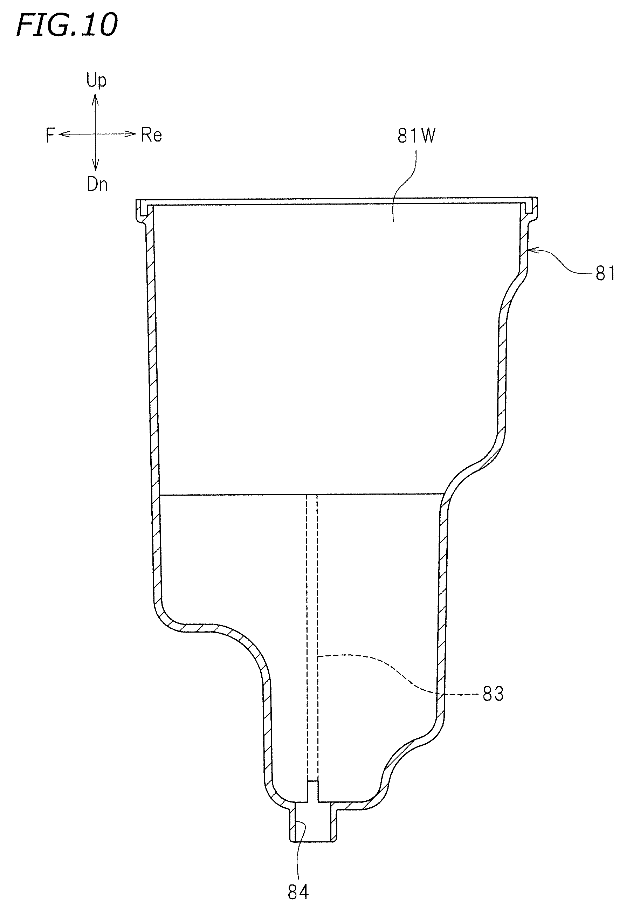

Fig. 8 is a plan view of the lower air cleaner case 81. As illustrated in Fig. 8, the lower air cleaner case 81 has a drain hole 84. The drain hole 84 is formed in a bottom wall 81 B of the lower air cleaner case 81. The water that has accumulated in the air cleaner 70 is discharged out of the lower air cleaner case 81 through the drain hole 84. The lower air cleaner case 81 has a first rib 82 and a second rib 83. The first rib 82 is formed on an inner wall 81W of the lower air cleaner case 81. As illustrated in Fig. 9, the first rib 82 extends in a vehicle longitudinal direction and in a vertical direction. As illustrated in Fig. 10, the second rib 83 is formed on the inner wall 81W of the lower air cleaner case 81. The second rib 83 extends in a vehicle lateral direction and in a vertical direction.

As illustrated in Fig. 2, the air cleaner 70 is provided with a first intake pipe 86. The first intake pipe 86 is provided on the upper air cleaner case 71. The first intake pipe 86 extends upward. The first intake pipe 86 has an opening facing rearward and obliquely leftward. The air cleaner 70 is provided with a second intake pipe 88. The second intake pipe 88 guides the air within the air cleaner 70 toward the engine 90. The second intake pipe 88 is provided on the lower air cleaner case 81. The second intake pipe 88 extends in a vehicle longitudinal direction. The second intake pipe 88 is connected to the cylinder head 96 via a throttle body 89.

As illustrated in Fig. 2, the motorcycle 1 has a fuel tank 64. The fuel tank 64 is disposed rearward of the air cleaner 70. The fuel tank 64 is disposed below the seat 10. The top end 71T of the upper air cleaner case 71 is positioned upward relative to the vertically central position 64C of the fuel tank 64. The height difference H1 between the top end 71 T of the upper air cleaner case 71 and the top end 64T of the fuel tank 64 is smaller than the height difference H2 between the top end 71T of the upper air cleaner case 71 and the vertically central position 64C of the fuel tank 64. The bottom end 64B of the fuel tank 64 is positioned downward relative to the top end 81T of the lower air cleaner case 81.

As illustrated in Fig. 2, the left backstay 56L extends rearward and obliquely upward from the left down frame 50L. As illustrated in Fig. 4, the left backstay 56L extends rearward and obliquely leftward from the left down frame 50L. As illustrated in Fig. 2, the left backstay 56L joins the left down frame 50L and the left second portion 42L of the left seat frame 40L to each other. As viewed from a side of the vehicle, a left joint portion 57L joining the left backstay 56L and the left second portion 42L of the left seat frame 40L to each other overlaps with the fuel tank 64.

As illustrated in Fig. 2, the right backstay 56R extends rearward and obliquely upward from the right down frame 50R. As illustrated in Fig. 4, the right backstay 56R extends rearward and obliquely rightward from the right down frame 50R. The right backstay 56R is positioned rightward of the left backstay 56L. As illustrated in Fig. 2, the right backstay 56R joins the right down frame 50R and the right second portion 42R of the right seat frame 40R to each other. As viewed from a side of the vehicle, a right joint portion 57R joining the right backstay 56R and the right second portion 42R of the right seat frame 40R to each other overlaps with the fuel tank 64.

As illustrated in Fig. 2, the left reinforcing frame 58L is disposed frontward relative to the left backstay 56L. The left reinforcing frame 58L joins the left down frame 50L and the left second portion 42L of the left seat frame 40L to each other. The left reinforcing frame 58L extends rearward and obliquely upward from the left down frame 50L. As illustrated in Fig. 4, the left reinforcing frame 58L extends rearward and obliquely leftward from the left down frame 50L. The left reinforcing frame 58L may join the left down frame 50L and the left first portion 41 L (see Fig. 2) of the left seat frame 40L to each other.

As illustrated in Fig. 4, the right reinforcing frame 58R is positioned rightward of the left reinforcing frame 58L. As illustrated in Fig. 2, the right reinforcing frame 58R is disposed frontward relative to the right backstay 56R. The right reinforcing frame 58R joins the right down frame 50R and the right second portion 42R of the right seat frame 40R to each other. The right reinforcing frame 58R extends rearward and obliquely upward from the right down frame 50R. As illustrated in Fig. 4, the right reinforcing frame 58R extends rearward and obliquely rightward from the right down frame 50R. The right reinforcing frame 58R may join the right down frame 50R and the right first portion 41 R (see Fig. 2) of the right seat frame 40R to each other.

As thus far described, in the motorcycle 1, the seat support portion 73 for supporting the seat 10 is formed integrally with the air cleaner 70, as illustrated in Fig. 2. Therefore, it is unnecessary to separately provide a member for supporting the seat 10 below the seat 10 and above the air cleaner 70. This makes it possible to increase the size of the air cleaner 70 upwardly by effectively utilizing the space formed below the seat 10, without raising the position of the seat 10 upward. That is, the size of the air cleaner 70 can be increased upwardly so that the front end portion 71 F of the upper surface 71 U of the air cleaner 70 can be disposed rearward of the recessed portion 29 of the body cover 28. As a result, the air cleaner 70 is ensured to have a sufficient volumetric capacity. In addition, the front end portion 71 Fof the upper surface 71 U of the air cleaner 70 is disposed so as to be spaced apart from the seat support portion 73, and the seat support portion 73 overlaps with the front end portion 71 F of the upper surface 71 U of the air cleaner 70 as viewed in plan of the vehicle. Therefore, the seat load is transmitted to the left and right seat load bearing portions 76L and 76R via the seat support portion 73, which is integrally formed with the air cleaner 70, so the seat load is less likely to be transmitted to the air cleaner 70. This prevents the shearing of the joined position 70L of the air cleaner 70, making it possible to prevent the deterioration of the sealing performance of the air cleaner 70 and consequently prevent the entry of water, dust, or the like from the joined position 70L of the air cleaner 70.

In the motorcycle 1 of the present preferred embodiment, the left first support portion 40LX and the right first support portion 40RX are positioned below the seat support portion 73 as viewed from a side of the vehicle, as illustrated in Fig. 2. This enables the seat load applied to the seat support portion 73 to be transmitted more reliably to the left seat frame 40L and the right seat frame 40R via the left first support portion 40LX and the right first support portion 40RX.

In the motorcycle 1 of the present preferred embodiment, as illustrated in Fig. 2, each of the left first support portion 40LX and the right first support portion 40RX is disposed on a first portion P of each of the left seat frame 40L and the right seat frame 40R in which each of the left seat frame 40L and the right seat frame 40R overlaps with the air cleaner 71 as viewed from a side of the vehicle, and the joined position 70L between the upper air cleaner case 71 and the lower air cleaner case 81 are positioned upward relative to the first portion P. This simplifies the structure of the left first support portion 40LX for supporting the left seat load bearing portion 76L and the right first support portion 40RX for supporting the right seat load bearing portion 76R. Moreover, maintenance of the inside of the air cleaner 70, for example, replacement of the element 85, becomes easier.

In the motorcycle 1 of the present preferred embodiment, the top end 71T of the upper air cleaner case 71 is positioned upward relative to the vertically central position 64C of the fuel tank 64, as illustrated in Fig. 2. Thus, the air cleaner 70 is allowed to have a larger volumetric capacity.

In the motorcycle 1 of the present preferred embodiment, the height difference H1 between the top end 71T of the upper air cleaner case 71 and the top end 64T of the fuel tank 64 is smaller than the height difference H2 between the top end 71 T of the upper air cleaner case 71 and the vertically central position 64C of the fuel tank 64. Thus, the air cleaner 70 is allowed to have a larger volumetric capacity.

In the motorcycle 1 of the present preferred embodiment, the lateral width L1 of the seat support portion 73 is smaller than the lateral width L2 of the front end portion 71 F of the upper surface 71 U of the upper air cleaner case 71, as illustrated in Fig. 3. This makes it possible to reduce the lateral width of the portion of the seat 10 that is positioned above the support portion 73. As a result, the rider's ground reach is improved.

In the motorcycle 1 of the present preferred embodiment, the upper air cleaner case 71 and the seat support portion 73 are formed of a material that is harder and more rigid than the material that forms the lower air cleaner case 81. A weight reduction and a cost reduction can be achieved by increasing the rigidity of the seat support portion 73, which receives the seat load, and the rigidity of the upper air cleaner case 71, which can slightly receive the seat load, and also lowering the rigidity of the lower air cleaner case 81, which does not receive the seat load.

In the motorcycle 1 of the present preferred embodiment, as illustrated in Fig. 8, the first rib 82 extending in a vehicle longitudinal direction and in a vertical direction and the second rib 83 extending in a vehicle lateral direction and in a vertical direction are formed on the inner wall 81W of the lower air cleaner case 81. When resonance is caused in the lower air cleaner 81, noise can be produced. However, the noise can be suppressed because the lower air cleaner case 81 has the first rib 82 and the second rib 83 formed therein.

In the motorcycle 1 of the present preferred embodiment, a plurality of ribs 75 extending in a vehicle longitudinal direction are formed on the seat support portion 73, as illustrated in Fig. 3. This allows the seat support portion 73 to have higher rigidity.

In the motorcycle 1 of the present preferred embodiment, the air cleaner 70 is supported by the left and right seat frames 40L and 40R at the left and right seat load bearing portions 76L and 76R and the left and right securing portions 77L and 77R, as illustrated in Fig. 3. This can inhibit the rotational movement of the air cleaner 70 that results from the moment produced at the seat support portion 73 when the seat 10 is opened.

In the motorcycle 1 of the present preferred embodiment, the left seat load bearing portion 76L includes the lower end 76LB disposed downward relative to the left securing portion 77L, and the right seat load bearing portion 76R includes the lower end 76RB disposed downward relative to the right securing portion 77R, as illustrated in Fig. 2. The size of the body cover 28 (see Fig. 1) provided over the sides of the left and right seat load bearing portions 76L and 76R becomes larger along the vehicle lateral direction. However, the portion of the body cover 28 that is larger along the vehicle lateral direction is positioned further downward. As a result, the rider's ground reach is improved.

### REFERENCE SIGNS LIST

- 10 --: Seat
- 12 --: Bracket
- 28 --: Body cover
- 29 --: Recessed portion
- 40L --: Left seat frame
- 40R --: Right seat frame
- 64 --: Fuel tank
- 70 --: Air cleaner
- 71 --: Upper air cleaner case
- 71F --: Front end portion
- 71U --: Upper surface
- 73 --: Seat support portion
- 76L --: Left seat load bearing portion
- 76R --: Right seat load bearing portion
- 81 --: Lower air cleaner case

## Claims

1. A straddle-type vehicle (1) comprising:
a head pipe (20);
a main frame (32) extending rearward and obliquely downward from the head pipe (20);
a left seat frame (40L) extending rearward from the main frame (32);
a right seat frame (40R) extending rearward from the main frame (32) and being disposed rightward of the left seat frame (40L);
a seat (10) positioned above the left seat frame (40L) and the right seat frame (40R);
a body cover (28) being provided over at least one side of each of the left seat frame (40L) and the right seat frame (40R), and including a recessed portion (29) recessed downward and formed rearward of the head pipe (20) and frontward of the seat (10);
an air cleaner (70) being disposed between the left seat frame (40L) and the right seat frame (40R) and below the seat (10), and including an upper surface (71U) having a front end portion (71 F) recessed downward and disposed rearward of the recessed portion (29);
an engaging portion (12) disposed on a back surface (11) of the seat (10);
a seat support portion (73) engaged with the engaging portion (12) and formed integrally with the air cleaner (70), **characterized in** the seat support portion (73) being disposed so as to be spaced apart from the front end portion (71 F) of the upper surface (71 U) of the air cleaner (70) and overlapping with the front end portion (71 F) of the upper surface (71 U) of the air cleaner (70) as viewed in plan of the vehicle, and the seat support portion (73) supporting the seat (10) in an openable and closable manner;
a left seat load bearing portion (76L) extending downward from the seat support portion (73) and being supported by the left seat frame (40L); and
a right seat load bearing portion (76R) extending downward from the seat support portion (73), being disposed rightward of the left seat load bearing portion (76L), and
being supported by the right seat frame (40R).

2. A straddle-type vehicle according to claim 1, further comprising:
a left support portion (40LX) being provided on the left seat frame (40L) and supporting the left seat load bearing portion (76L);
a right support portion (40RX) being provided on the right seat frame (40R) and supporting the right seat load bearing portion (76R), and wherein
the left support portion (40LX) and the right support portion (40RX) are positioned below the seat support portion (73) as viewed from a side of the vehicle.

3. A straddle-type vehicle according to claim 2, wherein the air cleaner (70) comprises an upper air cleaner case (71) disposed between the left seat frame (40L) and the right seat frame (40R) as viewed in plan of the vehicle, and a lower air cleaner case (81) disposed below the upper air cleaner case (71) and joined to the upper air cleaner case (71);
each of the left support portion (40LX) and the right support portion (40RX) is disposed on a first portion (P) of each of the left seat frame (40L) and the right seat frame (40R) in which each of the left seat frame (40L) and the right seat frame (40R) overlaps with the air cleaner (70) as viewed from a side of the vehicle; and
a joined position (70L) between the upper air cleaner case (71) and the lower air cleaner case (81) is positioned upward relative to the first portion (P).

4. A straddle-type vehicle according to claim 3, further comprising:
a fuel tank (64) disposed rearward of the air cleaner (70); and wherein
a top end (71T) of the upper air cleaner case (71) is positioned upward relative to a vertically central position (64C) of the fuel tank (64).

5. A straddle-type vehicle according to claim 4, wherein a height difference (H1) between the top end (71T) of the upper air cleaner case (71) and a top end (64T) of the fuel tank (64) is smaller than a height difference (H2) between the top end (71T) of the upper air cleaner case (71) and the vertically central position (64C) of the fuel tank (64).

6. A straddle-type vehicle according to any one of claims 3 to 5, wherein a lateral width (L1) of the seat support portion (73) is smaller than a lateral width (L2) of a front end portion (71 F) of the upper surface (71 U) of the upper air cleaner case (71);
the left seat load bearing portion (76L) inclines from the seat support portion (73) toward the left seat frame (40L); and
the right seat load bearing portion (76R) inclines from the seat support portion (73) toward the right seat frame (40R).

7. A straddle-type vehicle according to any one of claims 3 to 6, wherein the upper air cleaner case (71) and the seat support portion (73) are formed of a material that is harder and more rigid than a material that forms the lower air cleaner case (81).

8. A straddle-type vehicle according to any one of claims 3 to 7, wherein the lower air cleaner case (81) includes a first rib (82) extending in a vehicle longitudinal direction and in a vertical direction and a second rib (83) extending in a vehicle lateral direction and in a vertical direction, the first rib (82) and the second rib (83) being formed on an inner wall of the lower air cleaner case (81).

9. A straddle-type vehicle according to any one of claims 1 to 8, wherein the seat support portion (73) is provided with a plurality of ribs (75) extending in a vehicle longitudinal direction.

10. A straddle-type vehicle according to any one of claims 1 to 9, wherein the air cleaner (70) includes a left securing portion (77L) disposed rearward of the left seat load bearing portion (76L) and supported by the left seat frame (40L), and a right securing portion (77R) disposed rearward of the right seat load bearing portion (76R) and supported by the right seat frame (40R).

11. A straddle-type vehicle according to claim 10, wherein the left seat load bearing portion (76L) includes a lower end (76LB) disposed downward relative to the left securing portion (77L);
the right seat load bearing portion (76R) includes a lower end (76RB) disposed downward relative to the right securing portion (77R); and
the body cover (28) is provided over at least one side of each of the left seat load bearing portion (76L) and the right seat load bearing portion (76R).

## Patentansprüche

1. Ein Spreiz-Sitz-Typ-Fahrzeug (1), das umfasst:
ein Kopfrohr (20);
einen Haupt-Rahmen (32), der sich nach hinten und schräg nach unten von dem Kopfrohr (20) erstreckt;
einen linken Sitz-Rahmen (40L), der sich nach hinten von dem Haupt-Rahmen (32) erstreckt;
einen rechten Sitz-Rahmen (40R), der sich nach hinten von dem Haupt-Rahmen (32) erstreckt und der rechts von dem linken Sitz-Rahmen (40L) positioniert ist;
einen Sitz (10), der oberhalb des linken Sitz-Rahmens (40L) und des rechten Sitz-Rahmens (40R) positioniert ist;
eine Körper-Abdeckung (28), die über zumindest einer Seite von dem linken Sitz-Rahmen (40L) und dem rechten Sitz-Rahmen (40R) vorgesehen ist, und einen ausgenommenen Abschnitt (29) beinhaltet, der nach unten ausgenommen und nach hinten von dem Kopfrohr (20) und nach vorne von dem Sitz (10) ausgebildet ist;
einen Luftfilter (70), der zwischen dem linken Sitz-Rahmen (40L) und dem rechten Sitz-Rahmen (40R) und unter dem Sitz (10) positioniert ist, und eine obere Fläche (71 U) beinhaltet, die einen vorderen Endabschnitt (71 F) hat, der nach unten ausgenommen und nach hinten vor dem ausgenommenen Abschnitt (29) positioniert ist;
einen Eingriffsabschnitt (12), der an einer Rückfläche (11) des Sitzes (10) positioniert ist;
einen Sitz-Lagerabschnitt (73), der mit dem Eingriffsabschnitt (12) eingreift und
integral mit dem Luftfilter (70) ausgebildet ist, **dadurch gekennzeichnet, dass** der Sitz-Lagerabschnitt (73) positioniert ist, so dass dieser von dem vorderen Endabschnitt (71 F) von der oberen Fläche (71 U) des Luftfilters (70) beabstandet ist und mit dem vorderen Endabschnitt (71 F) der oberen Fläche (71 U) des Luftfilters (70) überlappt, wenn in einer Draufsicht des Fahrzeugs betrachtet, und der Sitz-Lagerabschnitt (73) den Sitz (10) in einer öffenbaren und schließbaren Weise lagert;
ein linker Sitz-Last-Lagerabschnitt (76L) sich nach unten von dem Sitz-Lagerabschnitt (73) erstreckt und durch den linken Sitz-Rahmen (40L) gelagert ist; und
ein rechter Sitz-Last-Lagerabschnitt (76R) sich nach unten von dem Sitz-Lagerabschnitt (73) erstreckt und rechts von dem linken Sitz-Last-Lagerabschnitt (76L) positioniert ist, und durch den rechten Sitz-Rahmen (40R) gelagert ist.

2. Ein Spreiz-Sitz-Typ-Fahrzeug gemäß Anspruch 1, das weiterhin umfasst:
einen linken Lagerabschnitt (40LX), der an dem linken Sitz-Rahmen (40L) vorgesehen ist und den linken Sitz-Last-Lagerabschnitt (87L) lagert;
einen rechten Lagerabschnitt (40RX), der an dem rechten Sitz-Rahmen (40R) vorgesehen ist und den rechten Sitz-Last-Lagerabschnitt (76R) lagert, und wobei der linke Lagerabschnitt (40LX) und der rechte Lagerabschnitt (40RX) unterhalb des Sitz-Lagerabschnitts (73) positioniert sind, wenn von einer Seite des Fahrzeugs betrachtet.

3. Ein Spreiz-Sitz-Typ-Fahrzeug gemäß Anspruch 2, wobei der Luftfilter (70) ein oberes Luftfilter-Gehäuse (71), das zwischen dem linken Sitz-Rahmen (40L) und dem rechten Sitz-Rahmen (40R) positioniert ist, wenn in einer Draufsicht des Fahrzeugs betrachtet, und ein unteres Luftfilter-Gehäuse (81), das unterhalb des oberen Luftfilter-Gehäuses (71) positioniert ist, und mit dem oberen Luftfilter-Gehäuse (71) verbunden ist, umfasst;
jeder von dem linken Lagerabschnitt (40LX) und dem rechten Lagerabschnitt (40RX) ist an einer ersten Position (P) von jedem von dem linken Sitz-Rahmen (40L) und dem rechten Sitz-Rahmen (40R) positioniert, in welcher jeder von dem linken Sitz-Rahmen (40L) und dem rechten Sitz-Rahmen (40R) mit dem Luftfilter (70) überlappt, wenn von einer Seite des Fahrzeugs betrachtet; und
eine verbundene Position (70L) zwischen dem oberen Luftfilter-Gehäuse (71) und dem unteren Luftfilter-Gehäuse (81) ist oberhalb relativ zu dem ersten Abschnitt (P) positioniert.

4. Ein Spreiz-Sitz-Typ-Fahrzeug gemäß Anspruch 3, das weiterhin umfasst:
einen Kraftstofftank (64), der hinter dem Luftfilter (70) positioniert ist; und wobei ein oberes Ende (71T) des oberen Luftfilter-Gehäuses (71) oberhalb relativ zu einer vertikalen Mittenposition (64C) des Kraftstofftanks (64) positioniert ist.

5. Ein Spreiz-Sitz-Typ-Fahrzeug gemäß Anspruch 4, wobei eine Höhendifferenz (H1) zwischen dem oberen Ende (71T) des oberen Luftfilter-Gehäuses (71) und einem oberen Ende (64T) des Kraftstofftanks (64) kleiner ist als eine Höhendifferenz (H2) zwischen dem oberen Ende (71T) des oberen Luftfilter-Gehäuses (71) und der vertikalen Mittenposition (64C) des Kraftstofftanks (64).

6. Ein Spreiz-Sitz-Typ-Fahrzeug gemäß irgendeinem der Ansprüche 3 bis 5, wobei eine Quer-Breite (L1) des Sitz-Lagerabschnitts (73) kleiner ist als eine Quer-Breite (L2) eines vorderen Endabschnitts (71 F) der oberen Fläche (71 U) des oberen Luftfilter-Gehäuses (71);
der linke Sitz-Last-Lagerabschnitt (76L) von dem Sitz-Lagerabschnitt (73) zu dem linken Sitz-Rahmen (40L) geneigt ist; und
der rechte Sitz-Last-Lagerabschnitt (76R) von dem Sitz-Lagerabschnitt (73) zu dem rechten Sitz-Rahmen (40R) geneigt ist.

7. Ein Spreiz-Sitz-Typ-Fahrzeug gemäß irgendeinem der Ansprüche 3 bis 6, wobei das obere Luftfilter-Gehäuse (71) und der Sitz-Lagerabschnitt (73) aus einem Material ausgebildet sind, das härter oder steifer ist als ein Material, welches das untere Luftfilter-Gehäuse (81) ausbildet.

8. Ein Spreiz-Sitz-Typ-Fahrzeug gemäß irgendeinem der Ansprüche 3 bis 7, wobei das untere Luftfilter-Gehäuse (81) eine erste Rippe (82), die sich in eine Fahrzeug-Längsrichtung und in eine Vertikal-Richtung erstreckt und eine zweite Rippe (63), die sich in eine Fahrzeug-Querrichtung und in eine Vertikal-Richtung erstreckt, beinhaltet, die erste Rippe (82) und die zweite Rippe (83) sind an einer inneren Wand des unteren Luftfilter-Gehäuses (81) ausgebildet.

9. Ein Spreiz-Sitz-Typ-Fahrzeug gemäß irgendeinem der Ansprüche 1 bis 8, wobei der Sitz-Lagerabschnitt (73) mit einer Mehrzahl von Rippen (75) vorgesehen ist, die sich in eine Fahrzeug-Längsrichtung erstrecken.

10. Ein Spreiz-Sitz-Typ-Fahrzeug gemäß irgendeinem der Ansprüche 1 bis 9, wobei der Luftfilter (70) einen linken Sicherungsabschnitt (77L), der rückwärtig von dem linken Sitz-Last-Lagerabschnitt (76L) positioniert ist, und durch den linken Sitz-Rahmen (40L) gelagert ist, und einen rechten Sicherungsabschnitt (77R), der rückwärtig von dem rechten Sitz-Last-Lagerabschnitt (76R) positioniert ist, und durch den rechten Sitz-Rahmen (40R) gelagert ist, beinhaltet.

11. Ein Spreiz-Sitz-Typ-Fahrzeug gemäß Anspruch 10, wobei der linke Sitz-Last-Lagerabschnitt (76L) ein unteres Ende (76LB) beinhaltet, das nach unten relativ zu dem linken Sicherungsabschnitt (77L) positioniert ist;
der rechte Sitz-Last-Lagerabschnitt (76R) ein unteres Ende (76RB) beinhaltet, das relativ unterhalb zu dem rechten Sicherungsabschnitt (77R) positioniert ist; und
die Körper-Abdeckung (28) ist über zumindest einer Seite von jedem von dem linken Sitz-Last-Lagerabschnitt (76L) und dem rechten Sitz-Last-Lagerabschnitt (76R) vorgesehen.

## Revendications

1. Véhicule de type à enfourcher (1) comprenant :
un tube frontal (20) ;
un cadre principal (32) s'étendant vers l'arrière et obliquement vers le bas depuis le tube frontal (20) ;
un cadre de siège gauche (40L) s'étendant vers l'arrière depuis le cadre principal (32) ;
un cadre de siège droit (40R) s'étendant vers l'arrière depuis le cadre principal (32) et disposé à droite du cadre de siège gauche (40L) ;
un siège (10) situé au-dessus du cadre de siège gauche (40L) et du cadre de siège droit (40R) ;
un capot de corps (28) disposé par-dessus au moins un côté de chacun des cadre de siège gauche (40L) et cadre de siège droit (40R), et comprenant une partie en retrait (29) vers le bas et l'arrière du tube frontal (20) et vers l'avant du siège (10) ;
un filtre à air (70) disposé entre le cadre de siège gauche (40L) et le cadre de siège droit (40R) et sous le siège (10) et comprenant une surface supérieure (71U) comportant une partie d'extrémité frontale (71F) en retrait vers le bas et disposée vers l'arrière de la partie en retrait (29) ;
une partie d'engagement (12) disposée sur une surface arrière (11) du siège (10) ;
une partie de support de siège (73) en prise avec la partie d'engagement (12) et
formée en une pièce avec le filtre à air (70), **caractérisé en ce que** la partie de support de siège (73) est disposée de manière à être placée à distance de la partie d'extrémité frontale (71 F) de la surface supérieure (71 U) du filtre à air (70) et se superpose à la partie d'extrémité frontale (71F) de la surface supérieure (71U) du filtre à air (70) dans une vue en plan du véhicule, et que la partie de support de siège (73) supporte le siège (10) de manière à pouvoir être ouvert et fermé ;
une partie de réception de charge de siège gauche (76L) s'étendant vers l'arrière à partir de la partie de support de siège (73) et supportée par le cadre de siège gauche (40L) ; et
une partie de réception de charge de siège droite (76R) s'étendant vers l'arrière à partir de la partie de support de siège (73), disposée à droite de la partie de réception de charge de siège gauche (76L) et supportée par le cadre de siège droit (40R).

2. Véhicule de type à enfourcher selon la revendication 1, comprenant en outre :
une partie de support gauche (40LX) prévue sur le cadre de siège gauche (40L) et supportant la partie de réception de charge de siège gauche (76L) ;
une partie de support droite (40RX) prévue sur le cadre de siège droit (40R) et supportant la partie de réception de charge de siège droite (76R) ; et où la partie de support gauche (40LX) et la partie de support droite (40RX) sont positionnées sous la partie de support de siège (73) dans une vue latérale du véhicule.

3. Véhicule de type à enfourcher selon la revendication 2, où le filtre à air (70) comprend un boîtier de filtre à air supérieur (71) disposé entre le cadre de siège gauche (40L) et le cadre de siège droit (40R) dans une vue en plan du véhicule, et un boîtier de filtre à air inférieur (81) disposé sous le boîtier de filtre à air supérieur (71) et attaché au boîtier de filtre à air supérieur (71) ;
chacune des portion de support gauche (40LX) et portion de support droite (40RX) sont disposées sur une première partie (P) de chacun des cadre de siège gauche (40L) et cadre de siège droit (40R), chacun des cadre de siège gauche (40L) et cadre de siège droit (40R) se superpose au filtre à air (70) dans une vue latérale du véhicule ; et
une position de liaison (70L) entre le boîtier de filtre à air supérieur (71) et le boîtier de filtre à air inférieur (81) se situe vers le haut par rapport à la première partie (P).

4. Véhicule de type à enfourcher selon la revendication 3, comprenant en outre :
un réservoir de carburant (64) disposé vers l'arrière du filtre à air (70) ; et où une extrémité supérieure (71T) du boîtier de filtre à air supérieur (71) se situe vers le haut par rapport à une position centrale verticale (64C) du réservoir de carburant (64).

5. Véhicule de type à enfourcher selon la revendication 4, où une différence de hauteur (H1) entre l'extrémité supérieure (71T) du boîtier de filtre à air supérieur (71) et une extrémité supérieure (64T) du réservoir de carburant (64) est plus petite qu'une différence de hauteur (H2) entre l'extrémité supérieure (71 T) du boîtier de filtre à air supérieur (71) et la position centrale verticale (64C) du réservoir de carburant (64).

6. Véhicule de type à enfourcher selon l'une quelconque des revendications 3 à 5, où une largeur latérale (L1) de la partie de support de siège (73) est plus petite qu'une largeur latérale (L2) d'une partie d'extrémité avant (71F) de la surface supérieure (71U) du boîtier de filtre à air supérieur (71) ;
la partie de réception de charge de siège gauche (76L) est inclinée depuis la partie de support de siège (73) en direction du cadre de siège gauche (40L) ; et
la partie de réception de charge de siège droite (76R) est inclinée depuis la partie de support de siège (73) en direction du cadre de siège droit (40R).

7. Véhicule de type à enfourcher selon l'une quelconque des revendications 3 à 6, où le boîtier de filtre à air supérieur (71) et la partie de support de siège (73) sont composés d'un matériau plus dur et plus rigide qu'un matériau formant le boîtier de filtre à air inférieur (81).

8. Véhicule de type à enfourcher selon l'une quelconque des revendications 3 à 7, où le boîtier de filtre à air inférieur (81) comprend une première nervure (82) s'étendant dans une direction longitudinale du véhicule et dans une direction verticale et une seconde nervure (83) s'étendant dans une direction latérale du véhicule et dans une direction verticale, la première nervure (82) et la seconde nervure (83) étant formées sur une paroi intérieure du boîtier de filtre à air inférieur (81).

9. Véhicule de type à enfourcher selon l'une quelconque des revendications 1 à 8, où la partie de support de siège (73) est munie d'une pluralité de nervures (75) s'étendant dans une direction longitudinale du véhicule.

10. Véhicule de type à enfourcher selon l'une quelconque des revendications 1 à 9, où le filtre à air (70) comprend une partie de fixation gauche (77L) disposée vers l'arrière de la partie de réception de charge de siège gauche (76L) et supportée par le cadre de siège gauche (40L), et une partie de fixation droite (77R) disposée vers l'arrière de la partie de réception de charge de siège droite (76R) et supportée par le cadre de siège droit (40R).

11. Véhicule de type à enfourcher selon la revendication 10, où la partie de réception de charge de siège gauche (76L) comprend une extrémité inférieure (76LB) disposée vers le bas par rapport à la partie de fixation gauche (77L) ;
la partie de réception de charge de siège droite (76R) comprend une extrémité inférieure (76RB) disposée vers le bas par rapport à la partie de fixation droite (77R) ; et
le capot de corps (28) est disposé par-dessus au moins un côté de chacune de la partie de réception de charge de siège gauche (76L) et de la partie de réception de charge de siège droite (76R).
